(19) Europäisches Patentamt
European Patent Office
Office européen des brevets

(11) Veröffentlichungsnummer: **0 298 037 A2**

(12) # EUROPÄISCHE PATENTANMELDUNG

(21) Anmeldenummer: **88810437.9**

(22) Anmeldetag: **24.06.88**

(51) Int. Cl.4: **C 09 B 57/04**
C 08 K 5/34

(30) Priorität: **03.07.87 CH 2536/87**

(43) Veröffentlichungstag der Anmeldung:
**04.01.89 Patentblatt 89/01**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **von der Crone, Jost, Dr.**
**La Dey**
**CH-1711 Arconciel (CH)**

(54) **Neue unsymmetrische Isoindolinpigmente enthaltend eine Estergruppe.**

(57) Isoindoline der Formel I

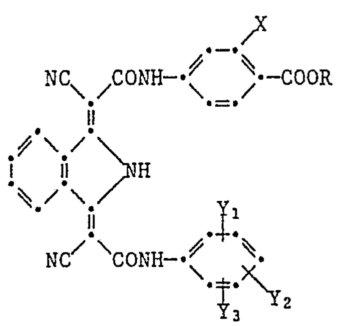

(I),

worin R $C_1$-$C_4$-Alkyl, X Wasserstoff oder Halogen, $Y_1$ und $Y_3$ unabhängig voneinander Wasserstoff, Halogen oder Methyl und $Y_2$ Halogen oder Methyl bedeuten.

Diese neuen unsymmetrischen Isoindolinen zeichnen sich aus durch ihre hervorragenden Pigmenteingenschaften, insbesondere durch eine sehr hohe Wetterbeständigkeit.

EP 0 298 037 A2

**Beschreibung**

**Neue unsymmetrische Isoindolinpigmente enthaltend eine Estergruppe**

Die vorliegende Erfindung betrifft neue unsymmetrische Biskondensationsprodukte von Diiminoisoindolin mit einem Molekül eines Cyanacetanilids mit p-ständiger Estergruppe und einem Molekül eines esterfreien Cyanacetanilids. Diese neuen unsymmetrischen Isoindolinen zeichnen sich aus durch ihre hervorragenden Pigmenteigenschaften, insbesondere durch eine sehr hohe Wetterbeständigkeit.

Isoindolinpigmente sind seit langer Zeit dem Fachmann bekannt. Symmetrische und unsymmetrische Biskondensationsprodukte von Diiminoisoindolin mit Cyanacetaniliden sind beispielsweise aus den beiden DE-OS 28 14 526 und 35 26 100 bekannt. Die erste dieser Offenbarungsschriften beschreibt u.a. das Pigment der Formel

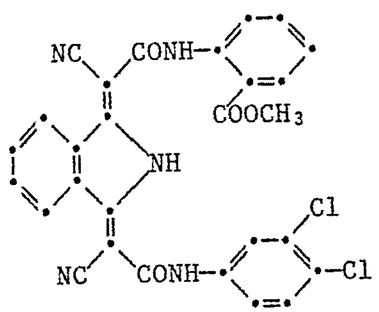

und die zweite z.B. das Pigment der Formel

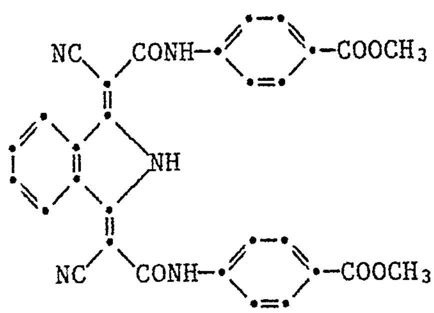

Obwohl sich diese Isoindoline ganz allgemein durch gute Pigmenteigenschaften auszeichnen, vermögen sie den heutigen Anforderungen der Technik nicht immer zu genügen.

Es ist nun gefunden worden, dass unsymmetrische Biskondensationsprodukte von Diiminoisoindolin mit einem Molekül eines Cyanacetanilids mit p-ständiger Estergruppe und einem Molekül eines esterfreien Cyanacetanilids sich durch hervorragende Pigmenteigenschaften auszeichnen, insbesondere durch eine im Vergleich zu den oben aufgeführten bekannten Isoindolinen, erheblich verbesserte Licht- und Wetterbeständigkeit.

Die vorliegende Erfindung betrifft demnach

Isoindoline der Formel I

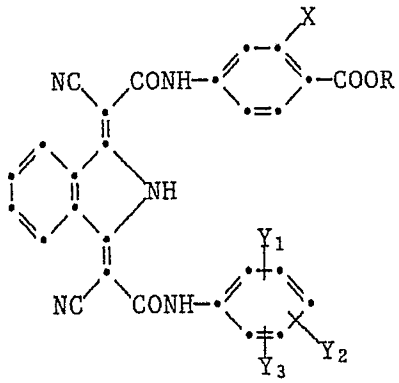

(I),

worin R $C_1$-$C_4$-Alkyl, X Wasserstoff oder Halogen, $Y_1$ und $Y_3$ unabhängig voneinander Wasserstoff, Halogen oder Methyl und $Y_2$ Halogen oder Methyl bedeuten.

R bedeutet als $C_1$-$C_4$-Alkyl z.B. Methyl, Ethyl, n-Propyl, Isopropyl, n-Butyl, sec-Butyl oder tert.-Butyl.

X, $Y_1$, $Y_2$ und $Y_3$ bedeuten als Halogen z.B. Brom, Fluor oder insbesondere Chlor.

Von besonderem Interesse sind Isoindoline der Formel II

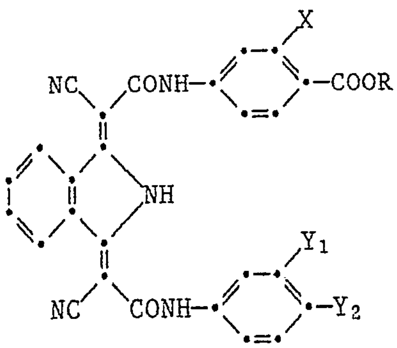

(II),

worin R, X, $Y_1$ und $Y_2$ die oben angegebene Bedeutung haben.

Bevorzugt sind Isoindoline der Formel II, worin R Methyl oder Ethyl, X und $Y_1$ unabhängig voneinander Wasserstoff oder Chlor und $Y_2$ Chlor oder Methyl bedeuten.

Besonders bevorzugt ist das Isoindolin der Formel II, worin R Methyl, X Wasserstoff und $Y_1$ und $Y_2$ Chlor bedeuten.

Zu den erfindungsgemässen Isoindolinen gelangt man, wenn man das Diiminoisoindolin der Formel III

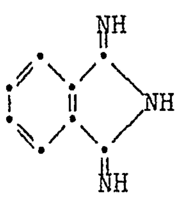

(III)

in beliebiger Reihenfolge mit je einem Mol eines Cyanacetanilides der Formel IV

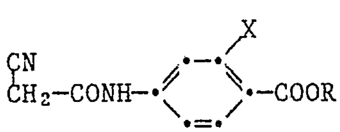

(IV)

und der Formel V

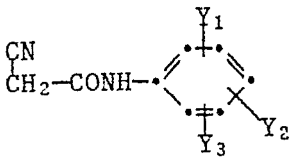

(V),

worin R, X, $Y_1$, $Y_2$ und $Y_3$ die oben angegebene Bedeutung haben, in Analogie zu an sich bekannten Methoden, wie sie z.B. in der DE-OS 28 14 526 oder in EP-A-62614 beschrieben sind, kondensiert.

Bei den Verbindungen der Formeln III, IV und V handelt es sich um bekannte Verbindungen.

Die nach diesen Methoden erhaltenen Isoindoline fallen zumeist schon in der Hitze aus und können durch Abfiltrieren und gegebenenfalls durch Waschen mit organischen Lösungsmitteln in reiner Form isoliert werden.

Die erfindungsgemäss einzusetzenden Isoindoline der Formel I stellen wertvolle Pigmente dar, welche im allgemeinen eine gute Textur besitzen und meistens als Rohprodukte verwendet können. Falls nötig oder erwünscht, kann man die Rohprodukte durch Mahlen oder Kneten in eine feindisperse Form überführen. Dabei werden zweckmässig Mahlhilfsmittel, wie Glas-, Kunststoff-, Stahl- oder Metallmahlkörper, anorganische und/oder organische Salze in Gegenwart oder Abwesenheit organischer Lösungmittel verwendet. Nach dem Mahlen werden Hilfsmittel wie üblich entfernt, lösliche anorganische Salze z.B. mit Wasser und wasserunlösliche Hilfsmittel beispielsweise durch Wasserdampfdestillation. Auch durch Behandeln der Rohpigmente mit organischen Lösungsmitteln kann oft eine Verbesserung der Pigmenteigenschaften erreicht werden.

Die erfindungsgemässen Isoindoline eignen sich als Pigmente zu Färben von hochmolekularem organischem Material.

Hochmolekulare organische Materialien, die mit den erfindungsgemässen Isoindolinen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Isoindoline als Toner oder in Form von Präparaten einzusetzen. Bezogen auf das zu pigmentierende hochmolekulare organische Material kann man die erfindungsgemässen Isoindoline in einer Menge von 0,01 bis 30 Gew.% vorzugsweise von 0,1 bis 10 Gew.%, einsetzen.

Die Pigmentierung der hochmolekularen organischen Substanzen mit den erfindungsgemässen Isoindolinen erfolgt beispielsweise derart, dass man ein solches Isoindolin gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Isoindoline in die Polymeren eingearbeitet werden. Es ist ferner möglich, zwecks Erzielung verschiedener Farbtöne den hochmolekularen, organischen Stoffen neben den erfindungsgemässen Isoindolinen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Isoindoline gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie z.B. hohe Farbstärke, Transparenz, Farbtonreinheit und Glanz, sowie gute Ueberlackier-, Migrations-, Hitze-, Licht- und hervorragende Wetterbeständigkeit, aus.

Die erfindungsgemässen Isoindoline eignen sich vorzugsweise zum Färben von wässrigen und/oder lösungsmittelhaltigen Lacken, insbesondere Automobillacken. Sie sind ganz besonders geeignet für die Verwendung für Metalleffektlackierungen.

Die nachfolgenden Beispiele dienen zur Erläuterung der Erfindung.

Beispiel 1:

3,6 g 1-(Cyan-4-ethoxycarbonyl-phenylcarbamoyl-methylen)-3-imino-isoindolin und 2,29 g Cyanessigsäure-3,4-dichloranilid werden in einer Mischung von 80 ml o-Dichlorbenzol und 20 ml Eisessig unter Rühren auf Rückflusstemperatur erhitzt. Nach 4 Stunden wird bei 100°C filtriert. Der Rückstand wird mit warmem o-Dichlorbenzol, dann kaltem Methanol und anschliessend mit warmem Wasser gewaschen und getrocknet. Man erhält 4,1 g des Isoindolins der Formel

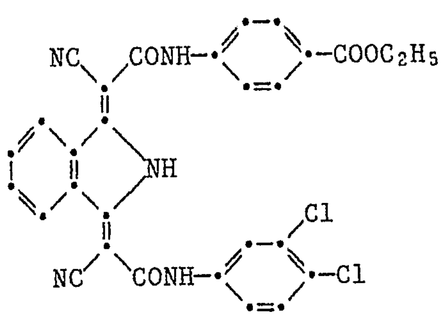

in form eines orangen Pulvers. Nach dem Einarbeiten in Lacke oder PVC erhält man brillante orange Ausfärbungen, die sich durch sehr gute Ueberlackier-, Migrations-, Licht- und hervorragende Wetterbeständigkeit auszeichnen.

Beispiele 2-5:

In analoger Weise wie in Beispiel 1 beschrieben, erhält man bei Verwendung entsprechender Cyanacetaniliden Isoindoline der Formel II, worin R, X, $Y_1$ und $Y_2$ die jeweils in der nachfolgenden Tabelle aufgeführte Bedeutung haben.

| Beispiel | R | X | $Y_1$ | $Y_2$ | Nuance in PVC (0,2 Gew.% Pigment, bezogen auf PVC) |
|---|---|---|---|---|---|
| 2 | $CH_3$ | H | Cl | Cl | rotstichig gelb |
| 3 | $CH_3$ | Cl | Cl | Cl | gelb |
| 4 | $CH_3$ | Cl | H | Cl | orange |
| 5 | $CH_3$ | H | H | $CH_3$ | orange |

Beispiel 6:

Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%-ig in Xylol, 36 g Melaminharz ®SUPER-BECKAMIN 13-501 (Reichhold Chemie AG) 50%-ig in Xylol:Butanol (2:1-Gemisch), 2 g Xylol und 2 g Ethylenglykolmonomethylether, und 2,5 g des nach Beispiel 2 erhaltenen Isoindolins werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 6 g Titandioxid ®KRONOS RN 59 (KRONOS Titan GmbH) und weiteren 24,0 g des Alkydmelamineinbrennlacks vermischt, auf Aluminiumbleche gespritzt und anschliessend während 30 Minuten bei 130°C eingebrannt. Man erhält sehr farbstarke rotstichig gelbe Ausfärbungen mit ausgezeichneten Licht- und Wetterbeständigkeiten.

Beispiel 7:

40 mg des gemäss Beispiel 1 erhaltenen Isoindolins werden mit 7,3 ml Dioctylphthalat und 13,3 g eines

stabilisierten Polyvinylchlorids vom Typ ®LONZA E 722 in einem Becherglas mit einem Glasstab gut vermischt. Das Gemisch wird auf einem Walzenstuhl während 5 Minuten bei 160° C zu einer dünnen Folie verarbeitet. Die so erzeugte PVC-Folie weist eine farbstarke, migrations-, wetter- und lichtbeständige orange Färbung auf.

**Patentansprüche**

1. Isoindoline der Formel I

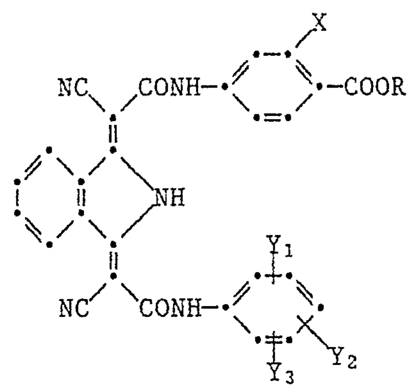

(I),

worin R $C_1$-$C_4$-Alkyl, X Wasserstoff oder Halogen, $Y_1$ und $Y_3$ unabhängig voneinander Wasserstoff, Halogen oder Methyul und $Y_2$ Halogen oder Methyl bedeuten.

2. Isoindoline gemäss Anspruch 1, der Formel II

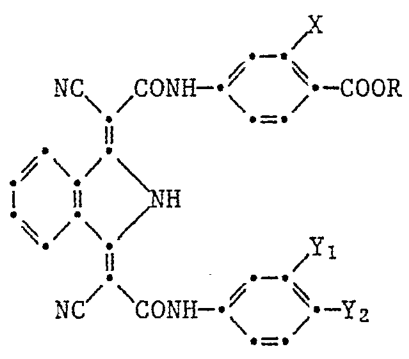

(II),

worin R, X, $Y_1$ und $Y_2$ die in Anspruch 1 angegebene Bedeutung haben.

3. Isoindoline gemäss Anspruch 2, der Formel II, worin R Methyl oder Ethyl, X und $Y_1$ unabhängig voneinander Wasserstoff oder Chlor und $Y_2$ Chlor oder Methyl bedeuten.

4. Isoindolin gemäss Anspruch 2, der Formel II, worin R Methyl, X Wasserstoff und $Y_1$ und $Y_2$ Chlor bedeuten.

5. Verfahren zum Färben von hochmolekularem organischem Material, dadurch gekennzeichnet, dass ein Isoindolin gemäss Anspruch 1 als Pigment verwendet wird.

6. Hochmolekulares organisches Material enthaltend als Pigment ein Isoindolin gemäss Anspruch 1.